# EUROPÄISCHE PATENTSCHRIFT

(11) **EP 3 376 213 B1**
(45) Veröffentlichungstag und Bekanntmachung des Hinweises auf die Patenterteilung: **12.11.2025**
(21) Anmeldenummer: 17161027.2
(22) Anmeldetag: 15.03.2017
(51) Int. Cl.: G01N 21/95, H02G 1/02, G06T 7/73, G06T 7/00, G06V 20/17, G06V 20/10, B64U 10/13, G01N 21/88, B64U 101/30

(54) **VERFAHREN UND ANORDNUNG FÜR EINE ZUSTANDSÜBERWACHUNG EINER ANLAGE MIT BETRIEBSMITTELN**
METHOD AND ASSEMBLY FOR MONITORING THE STATE OF A SYSTEM WITH OPERATING ELEMENTS
PROCÉDÉ ET SYSTÈME POUR UNE SURVEILLANCE DE L'ÉTAT D'UNE INSTALLATION COMPRENANT DES ÉLÉMENTS D'EXPLOITATION

(43) Veröffentlichungstag der Anmeldung: 19.09.2018
(73) Patentinhaber: Siemens Energy Global GmbH & Co. KG, 81739 München (DE)
(72) Erfinder: BIRCHBAUER, Josef Alois, 8054 Seiersberg (AT); GLIRA, Phillipp, 2230 Gänserndorf (AT); KÄHLER, Olaf, 8052 Graz (AT); KOPPENHÖFER, Bernd, 90429 Nürnberg (DE)

(56) Entgegenhaltungen:
- EP-A1- 1 548 908
- EP-A1- 2 902 319
- WO-A1-2016/149513

## Beschreibung

Die Erfindung betrifft ein Verfahren gemäß dem Oberbegriff des Anspruchs 1 und eine Anordnung gemäß dem Oberbegriff des Anspruchs 9.

Infrastrukturen wie etwa Hochspannungsleitungen, Windräder oder Brückenkonstruktionen weisen üblicherweise große Dimensionen auf. So sind Hochspannungsmasten mit Masthöhen um 100 m nicht unüblich. Eine visuelle Kontrolle durch geschultes Personal, tlw. unter Einsatz einer optischen Vergrößerungshilfe wie z.B. Ferngläsern, erfüllt die Anforderung einer durchgängigen und nachweisbaren Dokumentation nicht und ist i.d.R. mit vertretbarem Aufwand nur punktuell zu leisten. Weiterhin ist keine zeitliche Verlaufs-Analyse von Schäden im Rahmen einer Veränderungserkennung zwischen verschiedenen Messzeitpunkten möglich.

Soll eine automatisierte Bilderfassung von Betriebsmitteln wie etwa Isolatoren an Hochspannungs-Freileitungen durchgeführt werden, so muss derzeit im Rahmen einer visuellen Inspektion und Befundung sicher gestellt werden, dass auch Oberflächendetails erfasst werden, die kleinste Schäden erkennen lassen. Dafür ist eine hohe Bildauflösung erforderlich. Mit dem aktuellen Stand der Kameratechnik kann nicht gleichzeitig durch eine Einzelkamera sowohl die Gesamtheit der Anlage erfasst werden, als auch die geforderte Oberflächenauflösung erreicht werden.

Während etwa bei Vertikalbauwerken wie Windrädern ein sequentielles Abfliegen einzelner Höhenbereiche möglich scheint, ist dies bei Linienbauwerken wie Hochspannungsleitungen unökonomisch in Bezug auf das Flugmanagement, da Leitungsnetze im Ausmaß von hunderten Kilometer erfasst werden müssen.

Die Befliegung von Hochspannungstrassen oder anderen Anlagen mittels Laserscaneinrichtungen (sog. LIDAR, insbesondere "Airborne Laserscanning" (ALS)) und Bildaufnahme (Luftbildphotogrammetrie) mit anschließender visueller Kontrolle durch einen Techniker entspricht seit mehr als einem Jahrzehnt der gängigen Praxis. Im Rahmen der Erfindung wird der Begriff Luftaufnahme synonym zu dem Begriff Luftbild benutzt. Im Falle der vollformatigen Aufnahme von Luftbildern stehen heute Kameras mit bis zu 100 MPixeln zur Verfügung. Beispielhaft sind Luftbildkameras des Typs iXU/iXU-RS 1000 aus der Produktbroschüre "Phase One Aerial Cameras, Fully integrated Photography Solutions" von PhaseOne Industrial, Roskildeej 39, DK-2000 Frederiksberg, Denmark, http://industrial.phaseone.com/iXU_camera_system.aspx, bekannt. Gespiegelt an der Gesamthöhe der Infrastruktur resultiert der Einsatz einer solchen Kamera jedoch nicht in Auflösungen, die eine Detektion von subtilen Oberflächenveränderungen, wie beispielsweise Schmauchspuren, Rissen oder Lackabsplitterungen, im mm-Bereich zulassen. Daher ist keine Möglichkeit bekannt, um ohne einen geschulten Techniker Detailaufnahmen der zu überwachenden Betriebsmittel mit ausreichender Auflösung bereit zu stellen.

Aus der Veröffentlichung von Christoph Waldhauser et al., "Automated Classification of Airborne Laser Scanning Point Clouds", Springer Proceedings in Mathematics & Statistics, Vol. 97, p 269-292, September 2014, ist es bekannt, ein Flugzeug einzusetzen, um Objekte am Boden mit einer Laserscaneinrichtung in Form eines Punktwolkendatensatzes zu erfassen. Ferner beschreiben die Autoren Jie und Toth in "Topographic laser ranging and scanning: principles and processing", erschienen bei CRC press, 2008, mittels Airborne Laserscanning (ALS) von einer (bemannten oder unbemannten) Flugplattform aus darunterliegende Objekte in Form einer sogenannten 3D-Punktwolke aufzunehmen.

Aus der Druckschrift WO 2016/149513 A1 ist es bekannt, einen Freilleitungsmast mit einer kleinen Drohne zu umfliegen, wobei mittels Kameras und Sensoren Daten zum Betriebszustand erfasst werden. Auch die Druckschrift EP 1548908 A1 beschäftigt sich mit einer Inspektion von Infrastruktur.

Ausgehend von bekannten Verfahren zur Erfassung von hochaufgelösten Luftaufnahmen von Anlagen stellt sich an die Erfindung die Aufgabe, ein automatisiertes Verfahren anzugeben, das vergleichsweise schnell und kostengünstig zur Zustandsüberwachung einer Anlage eingesetzt werden kann.

Die Erfindung löst diese Aufgabe durch ein Verfahren gemäß Anspruch 1.

Ziel ist es, mit den Aufnahmen der Detailkamera eine Bewertung durchzuführen, um Schäden an der auf ihren Zustand überwachten Anlage zu erkennen. Diese Bewertung der Detailaufnahmen kann z.B. manuell durch einen Techniker in einer Leitstelle erfolgen oder maschinell mit einer geeigneten Software. Auch eine maschinelle Vorverarbeitung und anschließende manuelle Auswertung ist möglich. Werden Schäden an z.B. einem Isolator an einer Freileitung erkannt, so kann eine Reparatur ausgelöst werden, bevor das Betriebsmittel ausfällt. Dies erhöht die Verfügbarkeit der Anlage bzw. des gesamten Energienetzes und spart dadurch Kosten für Ausfälle ein. Außerdem entfallen kostspielige manuelle Inspektionen der Anlage wie etwa einer Freileitung.

Da die Überblickssensoranordnung die gesamte Infrastruktur bzw. Anlage erfasst, sind darin einzelne Infrastrukturelemente (z.B. Isolatoren) z.B. in einem Punktwolkendatensatz und einem Bilddatensatz noch relativ grob aufgelöst. Somit sind in diesen Bildern noch keine Details dieser Infrastrukturelemente erkennbar. Im Rahmen der Erfindung bezeichnet der Begriff Punktwolkendatensatz eine mittels einer Laserscaneinrichtung gewonnene 3D-Punktwolke.

Als Detailkamera kann z.B. eine Kamera eingesetzt werden, die aus einer für einen Überflug typischen Entfernung von einigen Dutzend bis wenigen hundert Metern Luftaufnahmen erstellen kann, die auch kleinste Schäden im mm-Bereich erkennbar machen. Hierfür kann z.B. im Vergleich zu einer Überblickskamera eine vergleichsweise längere Brennweite, also ein Teleobjektiv eingesetzt werden. Beispielsweise kann ein solcher Schaden ein 2,5 cm langer Riss in einem Isolatorschirm sein. Besonders bevorzugt ist es, eine Farbkamera einzusetzen. Ferner ist es vorteilhaft, wenn die Kamera dreh- und schwenkbar gelagert wird, um eine genaue Ausrichtung auf die ermittelten Positionen der Betriebsmittel zu gestatten. Dabei kann die Detailkamera mit Vorteil während der Bewegung des Fahrzeugs an der Anlage entlang derart nachgeführt werden, das einer Bewegungsunschärfe der Detailaufnahmen entgegen gewirkt wird. Hierfür können die Geschwindigkeit und Richtung des Fahrzeugs anhand einer zeitlich genauen Positionsbestimmung des Fahrzeugs ermittelt werden. Die Detailkamera kann als hochauflösende Kamera ausgeführt sein. Aufgrund des im Vergleich zu einer Überblickskamera weitaus geringeren Bildausschnitts kann die Auflösung der Detailkamera dabei ggf. sogar geringer gewählt werden als die Auflösung einer Überblickskamera.

Als geeignete Positionsbestimmungseinrichtung kann beispielsweise eine satellitengestützte Positionsbestimmung, z.B. mittels GPS oder Galileo, im Fahrzeug eingesetzt werden. Eine Position im Sinne der Erfindung gibt stets nicht die geographische Länge und Breite an, sondern auch die Höhe (z.B. über dem Meeresspiegel) an. Dabei ist z.B. eine zeitlich genaue Positionsbestimmung, insbesondere eine msgenaue Positionsbestimmung, möglich, wenn das Fahrzeug sich entlang der Anlage bewegt. Bevorzugt ist es, wenn die Positionsbestimmungseinrichtung mit einer Auflösung von weniger als einem Meter die Position bestimmen kann. Hierbei ist das sog. GNSS/RTK System genauer als das GPS.

Die Auswerteeinrichtung kann beispielsweise mit herkömmlichen Rechnereinrichtungen und Datenspeichern bereit gestellt werden. Sie kann an Bord des Fahrzeugs oder zentral an einer Leistelle vorgesehen werden.

Als Fahrzeug kann beispielsweise ein Lastkraftwagen eingesetzt werden, der entlang einer Freileitung auf einer Straße fährt. Das Fahrzeug kann jedoch auch ein Luftfahrzeug wie ein Flugzeug, ein Hubschrauber oder dergleichen sein. In dem Fall eines Luftfahrzeugs entstehen Luftaufnahmen. Das Fahrzeug kann bemannt oder unbemannt, ggf. autonom fahrend, betrieben werden.

Der wesentliche Vorteil des erfindungsgemäßen Verfahrens gegenüber den bisherigen Lösungen liegt in der Automatisierung des Aufnahmeprozesses. So werden zunächst die interessanten Infrastrukturelemente automatisch lokalisiert und anschließend automatisch im Detail aufgenommen. Überblicks- und Detailaufnahmen werden geschickt kombiniert, um einen vollständigen Überblick über die Infrastruktur zu erhalten. Potentiell besonders relevante Bereiche werden selektiv in höherer Detailauflösung erfasst, was differenzierte Analysen und Befundungen erlaubt.

Zwar ist aus der gleichnamigen Broschüre die Kamera "IGI Urban Mapper", IGI mbH, Langenauer Str. 46, D-57223 Kreuztal, "www.IGI-SYSTEMS.com", bekannt, die für eine Erstellung von dreidimensionalen Stadtbildern entwickelt wurde. Um eine Infrastruktur wie eine Freileitung mit Betriebsmitteln zu erfassen, müssten jedoch mehrere Kameras kombiniert werden, um z.B. einen gesamten Mast zu erfassen. Dies ist vergleichsweise sehr teuer und stellt mit entsprechend hohem Gewicht und Platzbedarf hohe Anforderungen an ein Fluggerät.

Alternativ zur Erfindung könnte auch eine hochauflösende Zeilenkamera eingesetzt werden, was jedoch das Problem mit sich bringen würde, die aufgenommenen Bildzeilen höchstgenau zueinander auszurichten, da andernfalls Verzerrungen induziert werden. Zusammenfassend ist festzustellen, dass die bisherigen Ansätze für den Anwendungsfall der automatisierten Überwachung einer Infrastruktur mit großer vertikaler und horizontaler Ausdehnung wie z.B. einer Freileitung nicht geeignet sind.

Gemäß des erfindungsgemäßen Verfahrens wird für die Überblickssensoranordnung eine Laserscaneinrichtung zur Erfassung eines Punktwolkendatensatzes eingesetzt. Eine Laserscaneinrichtung ist beispielsweise ein LIDAR-System, wie es bei (teil-)autonomen Kraftfahrzeugen zur Gewinnung von dreidimensionalen Modellen der Umgebung des Fahrzeugs verwendet wird. Der Laser misst jeweils Abstandswerte des Sensors zu Objekten in der Umgebung, so dass sich aus einer Vielzahl von Messungen ein Punktwolkendatensatz ergibt. Ist die Position des Sensors bzw. des Fahrzeugs bekannt, so kann die Position eines Punktes aus dem Punktwolkendatensatz durch Bezugnahme auf die Position der Laserscaneinrichtung bzw. des Flugobjekts und der Richtung, auf die die Laserscaneinrichtung ausgerichtet ist, sehr genau rekonstruiert werden. Bei dynamischen Messverfahren wie z.B. dem Mobile Laserscanning (MLS) oder dem Airborne Laserscanning (ALS), werden Laserscanner, gemeinsam mit einem GNSS/INS-System (Global Navigation Satellite System bzw. Inertial Navigation System) eingesetzt. Dies dient zur Bestimmung einer Fahrzeugtrajektorie, um die Umgebung des Fahrzeugs in Form einer 3D-Punktwolke zu erfassen. Ist die relative Orientierung zwischen dem GNSS/INS-System und dem Laserscanner bekannt, kann durch Kombination der Fahrzeugtrajektorie und der Laserscanmessungen (Distanz und Richtungen) eine 3D-Punktwolke erzeugt werden.

Dabei ist es sinnvoll, die Anlage mit der Laserscaneinrichtung in ihrer gesamten vertikalen Dimension, also beispielsweise über die gesamte Höhe eines Masts, zu erfassen. Typischerweise werden heutzutage bei einer Zustandsüberwachung einer Anlage mittels eines Fluggeräts stets Laserscaneinrichtungen eingesetzt, weil damit auch eine Erfassung des Durchhangs einer Leitung und der Abstand einer Leitung zum Erdboden erfasst werden können. Außerdem kann überwacht werden, wie nahe eine Vegetation der Anlage kommt, also z.B. ob Bäume oder Sträucher zu einer Freileitung hinaufwachsen.

Gemäß des erfindungsgemäßen Verfahrens wird für die Überblickssensoranordnung eine Überblickskamera zur Erfassung eines Bilddatensatzes eingesetzt. Als Überblickskamera zur Erfassung eines Bilddatensatzes kann eine Kamera eingesetzt werden, die bauartbedingt, ggf. durch einen geeigneten Vergrößerungsmechanismus bzw. ein entsprechendes Objektiv, einen ähnlich großen Abschnitt der Umgebung des Fahrzeugs abbilden kann wie die Laserscaneinrichtung. Die Auflösung sollte dafür ausreichend sein, um Objekte von der Größe einiger cm bis dm zumindest in Umrissen erkennbar zu machen. Dies können beispielsweise Betriebsmittel wie Isolatoren, aber auch Fremdkörper wie Vogelnester sein. Vorzugsweise wird ein Weitwinkelobjektiv für die Überblickskamera eingesetzt. Ferner ist es vorteilhaft, wenn die Überblickskamera im Wesentlichen gleich ausgerichtet wird wie die Laserscaneinrichtung, wenn diese ebenfalls in der Überblickssensoranordnung verwendet wird. Dies kann beispielsweise erreicht werden, indem Laserscaneinrichtung und Überblickskamera zusammen auf einer Befestigungsvorrichtung angeordnet werden, so dass sie stets auf die gleiche Richtung zeigen. Die Ausrichtung der Laserscaneinrichtung und der Überblickskamera bzw. bei Einsatz einer gemeinsamen Befestigungseinrichtung die Ausrichtung der Befestigungseinrichtung kann bei Einsatz eines Fahrzeugs in Bezug zum Fahrzeugs festgelegt sein, so dass eine Veränderung der "Blickrichtung" während des einer Datensammlung nicht möglich ist. Alternativ kann eine während der Datensammlung veränderbare Blickrichtung erreicht werden, indem die Befestigungseinrichtung oder die beiden einzelnen Sensoren Laserscanner und Überblickskamera dreh- und schwenkbar gelagert werden, so dass z.B. bei Einsatz eines Flugobjekts als Fahrzeug eine Einstellung der Richtung relativ zur Flugrichtung bzw. zu einer aus einer vorhergehenden Flugplanung bekannten Flugtrajektorie mittels Elektromotoren o.Ä. möglich wird.

Alternativ zu einer im Wesentlichen gleichen Ausrichtung von Laserscaneinrichtung und Überblickskamera kann eine Laserscaneinrichtung verwendet werden, die für einen vergleichsweise großen Richtungsbereich von z.B. 330° ausgebildet ist. Dies ermöglicht, dass die Laserscaneinrichtung auch ohne Abstimmung auf die Blickrichtung einer Überblickskamera stets ausreichende 3D-Punktwolkendaten sammelt, um diese mit Bildaufnahmen einer Kamera zu kombinieren.

Die Ausrichtung von Laserscaneinrichtung und/oder Überblickskamera kann beispielsweise in Bezug auf eine Längsachse durch das Flugobjekt derart gewählt werden, dass sich bei Geradeausflug des Flugobjekts, d.h. in gerader Linie und parallel zur Erdoderfläche, ein Blickwinkel ergibt, der schräg nach unten (z.B. zw. 30° und 70° zur Erdoberfläche) ausgerichtet ist. Dies hat den Vorteil, dass eine auf großer Fläche angeordnete Anlage wie z.B. eine Freileitung leicht zu erfassen ist. Weiterhin kann die Ausrichtung derart erfolgen, dass der Blickwinkel zu einer Seite der Flugtrajektorie gekippt ist, so dass z.B. nach rechts oder links ein Winkel zw. 30° und 70° zur Erdoberfläche ergibt. Dies hat den Vorteil, dass die Betriebsmittel und andere Objekte von der Seite anstatt direkt von oben aufgenommen werden, wodurch die dreidimensionale Form besser erkennbar und die Objekte leicht zugeordnet werden können. Beispielsweise erscheint ein Isolator in erster Näherung bei einem Vorbeiflug mit schrägem Blickwinkel als eine Röhre zwischen Mast und Freileitung. Direkt von Vorne erscheint ein Isolator dagegen nur als Rechteck und von direkt von oben nur als ein Kreis.

Werden eine Überblickskamera und eine Laserscaneinrichtung gemeinsam eingesetzt, so ist es vorteilhaft, den Bilddatensatz und den Punktwolkendatensatz derart räumlich zu Überlagern bzw. zu registrieren, dass z.B. in einem internen Datenspeicher des Fahrzeugs die Punktwolkendaten und Bilddaten der Überblickskamera mit Bezug zueinander abgespeichert werden, so dass einem Objekt im Bild mittels der Punktwolke eine exakte Position zugeordnet werden kann. In einer bevorzugten Ausführungsform des erfindungsgemäßen Verfahrens wird mittels der Überblickskamera sichtbares Licht erfasst. Dies ist ein Vorteil, weil viele Objekte im sichtbaren Spektrum gut erkennbar sind, beispielsweise Objekte mit anderer Farbe als der Umgebung.

In einer weiteren bevorzugten Ausführungsform des erfindungsgemäßen Verfahrens wird mittels der Überblickskamera infrarotes und/oder ultraviolettes Licht erfasst. Dies ist ein Vorteil, weil außerhalb des sichtbaren Spektrums, insbesondere mittels Wärmestrahlung im IR-Bereich, z.B. im Betrieb aufgeheizte elektrische Betriebsmittel leicht als Wärmequellen gegenüber der Umgebung erkennbar sind.

Gemäß des erfindungsgemäßen Verfahrens wird eine Gewinnung der Überblicksdaten zu einem ersten Zeitpunkt durchgeführt und später, zu einem zweiten Zeitpunkt und nach Bestimmung der Positionen der Betriebsmittel, wird eine Gewinnung der Detailaufnahmen durchgeführt. Dies ist ein Vorteil, weil diese Herangehensweise besonders einfach ist. Zuerst werden mit einem einzigen Fahrzeug die Überblicksdaten, d. h. Punktwolkendaten gewonnen. Diese können dann z.B. offline nach Rückkehr des Fahrzeugs zur Leitstelle ausgewertet und die Positionen der interessanten Betriebsmittel festgestellt werden. Danach kann mit dem einzigen Fahrzeug die Anlage erneut untersucht werden, um mit der Detailkamera die Detailaufnahmen zu erfassen.

In einer weiteren bevorzugten Ausführungsform des erfindungsgemäßen Verfahrens wird die Auswerteeinrichtung im einzigen Fahrzeug vorgesehen. Dies ist ein Vorteil, weil bei entsprechender Auslegung der Auswerteeinrichtung eine Verarbeitung der Überblicksdaten nahezu in Echtzeit möglich ist, so dass bei einem einzigen Erfassungsvorgang, z.B. einer einzigen Befliegung einer Freileitungsanlage, direkt die Positionen der Betriebsmittel ermittelt und die Detailaufnahmen erfasst werden können. Dies spart Zeit, Kosten und Aufwand für einen zweiten Erfassungsvorgang für die Detailaufnahmen ein. Die Auswerteeinrichtung kann mit herkömmlichen Rechnereinrichtungen und Datenspeichern ausgebildet werden.

Das Fahrzeug sammelt und speichert Datensätze bei einem ersten Erfassungsvorgang mittels der Laserscaneinrichtung. Nach dem ersten Erfassungsvorgang können die abgespeicherten Datensätze ausgelesen und verarbeitet werden, um die Positionen der Betriebsmittel zu erkennen und anschließend einen zweiten Erfassungsvorgang der Anlage zu planen. Bei dem zweiten Erfassungsvorgang wird dann die Detailkamera für Luftaufnahmen eingesetzt. Für diese Ausführungsform genügt es, wenn das einzige Fahrzeug für den ersten Erfassungsvorgang mit der Laserscaneinrichtung und für den zweiten Erfassungsvorgang mit der Detailkamera ausgestattet wird.

Alternativ kann die Auswerteeinrichtung in einer Leitstelle für die Zustandsüberwachung vorgesehen sein. Dies ist ein Vorteil, weil die eingangs beschriebene Ermittlung der Positionen der Betriebsmittel nicht im Fahrzeug vorgenommen werden muss. Hierdurch können Gewicht und Energieverbrauch beim Fahrzeug eingespart werden, was das Fahrzeug vergleichsweise kostengünstiger, kleiner und auf weiteren Strecken einsetzbar macht. In einer bevorzugten Weiterbildung dieser Ausführungsform kann eine Kommunikationsverbindung zwischen Fahrzeug und Auswerteeinrichtung bzw. Leitstelle im Wesentlichen kontinuierlich aufrecht erhalten werden, so dass das Fahrzeug die Überblicksdaten an die Auswerteeinrichtung übermittelt und von dieser die vermuteten Positionen der Betriebsmittel zurückgesandt erhält. Auf diese Weise können auch bei einem einzigen Erfassungsvorgang die Detailaufnahmen direkt gewonnen werden, was Zeit, Kosten und Aufwand für einen zweiten Erfassungsvorgang für die Detailaufnahmen einspart.

In einer anderen bevorzugten Ausführungsform des erfindungsgemäßen Verfahrens wird eine Cloud-Auswerteeinrichtung vorgesehen. Die Cloud-Auswerteeinrichtung kann beispielsweise als eine Cloud-Applikation bereit gestellt sein und auf externe Rechenzentren zur Erkennung der Positionen zurückgreifen. Hierfür ist es vorteilhaft, wenn das Flugobjekt für den Datenaustausch mit der Cloud eine permanente Datenkommunikation ermöglicht, z.B. per Satellitennetzwerk.

In einer weiteren bevorzugten Ausführungsform des erfindungsgemäßen Verfahrens wird als das einzige Fahrzeug eine Flugdrohne eingesetzt. Eine Flugdrohne im Sinne der Erfindung ist ein unbemanntes Luftfahrzeug. Geeignet ist beispielsweise eine Multikopter-Drohne, die für einen Erfassungsvorgang für Überblicksdaten und/oder Detailaufnahmen mit z.B. 30-40 km/h vergleichsweise langsam und in geringer Höhe entlang der Anlage fliegt. Dies hat den Vorteil, dass eine unbemannte Drohne das Risiko, das ein menschlicher Pilot tragen müsste, ausschließt. Kommt es beispielsweise zu einem Absturz, ist in der Regel nur Sachschaden zu erwarten. Die Drohne kann beispielsweise wie heute bei Militärdrohnen üblich per Funk aus einer Leistelle ferngesteuert werden. Bevorzugt ist es, wenn die Drohne eine vorgegebene Route automatisch in vorgegebener Höhe abfliegt. Dies ist besonders kostengünstig. Dabei kann die Flugroute z.B. automatisiert anhand von Bebauungsplänen der Anlagen Betreiber geplant werden.

Alternativ kann jedoch auch ein herkömmliches Flugobjekt wie ein Flugzeug oder ein Hubschrauber mit einem Piloten eingesetzt werden.

Als erstes und als zweites Fahrzeug wird ein einziges Fahrzeug eingesetzt, das die Überblickssensoranordnung und die Detailkamera aufweist. Dies ist ein Vorteil, weil nur ein einziges Fahrzeug zur Durchführung des Verfahrens benötigt wird. Dies spart Kosten in der Herstellung und Konfiguration des Fahrzeugs ein.

In einer weiteren bevorzugten Ausführungsform des erfindungsgemäßen Verfahrens wird die Detailkamera bei dem gleichen Erfassungsvorgang wie die Laserscaneinrichtung und die Überblickskamera eingesetzt. Dies ist ein Vorteil, weil so der Aufwand für einen zweiten Erfassungsvorgang wie z.B. einen erneuten Überflug mit einem Fluggerät entfällt. Voraussetzung für dieses Vorgehen ist es, dass die Auswerteeinrichtung schnell genug eine Auswertung der Position der zu filmenden Objekte wie etwa Betriebsmittel bereit stellt, damit unmittelbar die Detailkamera darauf gerichtet werden kann.

In einer weiteren bevorzugten Ausführungsform des erfindungsgemäßen Verfahrens werden zusätzlich die Abmessungen der Betriebsmittel bestimmt. Dies ist ein Vorteil, weil dann neben der Position auch die dreidimensionalen Abmessungen bekannt sind, so dass die Detailkamera bei besonders großen Objekten so geführt werden kann, dass diese sicher komplett fotografiert werden können.

Als Anlage wird eine elektrische Freileitung mit Masten und Leitungen eingesetzt, wobei an den Masten elektrische Betriebsmittel angeordnet werden.

Als Betriebsmittel werden elektrische Isolatoren an den Masten verwendet.

In einer weiteren bevorzugten Ausführungsform des erfindungsgemäßen Verfahrens werden mittels der Auswerteeinrichtung die Leitungen durch ein anhand von Beispieldaten trainiertes automatisches Klassifikationsverfahren erkannt, und ein vereinfachtes Linien-Modell der erkannten Leitungen wird erstellt, und die Positionen der Isolatoren werden jeweils am Kontaktpunkt zweier modellierter Leitungen erkannt. Dies erfolgt, indem zunächst der Leitungsverlauf modelliert, also durch eine sogenannte Kettenlinie oder Seilkurve abgebildet wird. Dies ist lange bekannt und beispielsweise auf Wikipedia erläutert: https://de.wikipedia.org/wiki/Kettenlinie_(Mathematik). Beispielsweise kann aus den Übergangspunkten zwischen Punkten der Klasse "Leitung" und "Mast" bzw. den Schnittpunkten zweier Kettenlinien aufeinanderfolgender Leitungsabschnitte der Anschlusspunkt eines Isolators bestimmt werden. Das automatische Klassifikationsverfahren kann die Leitungen z.B. durch sog. Semantische Klassifizierung in der aufgenommenen Punktwolke erfassen; d.h. die Punkte im Punktwolkendatensatz werden vordefinierten Klassen zugeordnet - insbesondere der Klasse "Leitung". Dieser Schritt kann durch verschiedenste Ansätze erfolgen. Als eine mögliche Methode sind Ansätze des maschinellen Lernens zu nennen. Dabei werden zunächst für jeden Punktwolken-Datenpunkt Merkmale erhoben, die die räumliche Struktur beschreiben und anschließend wird in diesem Merkmalsraum ein sog. Klassifikator trainiert. Ein geeigneter Ansatz für ein automatisches Klassifikationsverfahren ist aus der Veröffentlichung von Christoph Waldhauser et al., "Automated Classification of Airborne Laser Scanning Point Clouds", Springer Proceedings in Mathematics & Statistics, Vol. 97, p 269-292, September 2014, bekannt.

Ein weiterer geeigneter Ansatz ist aus der Veröffentlichung "Fast semantic segmentation of 3D point clouds using a dense CRF with learned parameters" von Daniel Wolf et al., International Conference on Robotics and Automation, p. 4867-4873, 2015, bekannt. Das beschriebene Verfahren ist anhand eines Datensatzes von Bildern eines Innenraumes in der Lage, Objekte zu erkennen und dabei insbesondere zu berücksichtigen, dass bestimmte Objekte wie z.B. Stuhl und Tisch häufig räumlich eng beieinander angeordnet aufzufinden sind. Übertragen auf das vorliegende Beispiel einer Freileitung ist z.B. ein Isolator dort zu erwarten, wo auch ein Mast und eine Leitung erkannt wurden.

Ferner behandelt auch die Veröffentlichung "Fast semantic segmentation of 3d point clouds with strongly varying density" von Timo Hackel et al., ISPRS Annals - ISPRS Congress, Prague, 2016, das Themengebiet der Erkennung von Objekten in Punkwolkendatensätzen.

Mittels der Auswerteeinrichtung werden die Leitungen und die Masten durch ein anhand von Beispieldaten trainiertes automatisches Klassifikationsverfahren erkannt, und ein vereinfachtes Linien-Modell der erkannten Leitungen und Masten wird erstellt, und die Positionen der Isolatoren werden am Kontaktpunkt der Masten mit den Leitungen erkannt. Es können sinngemäß die gleichen Lösungsansätze herangezogen werden wie für die vorhergehende Ausführungsform erläutert.

In einer weiteren bevorzugten Ausführungsform des erfindungsgemäßen Verfahrens wird mittels der Auswerteeinrichtung die Position eines Betriebsmittels an einem Mast abgeschätzt, indem anhand einer vorher bekannten Position des Masten und eines bereits erfassten Teilabschnitts einer Leitung zu diesem Mast, die Position des Betriebsmittels an einem Schnittpunkt eines aus dem Teilabschnitt extrapolierten Leitungsverlaufs mit einer vertikalen Linie durch die Position des Masten festgelegt wird. Diese Ausführungsform hat den Vorteil, gewissermaßen vorrausschauend die interessanten und zu überwachenden Positionen an einem Mast abzuschätzen, noch bevor die Überblickssensoranordnung diesen Mast erfasst hat. Damit kann die Detailkamera schon einer Annäherung an den betreffenden Mast beginnen, Detailaufnahmen zu sammeln. Dies erhöht die Wahrscheinlichkeit, dass mindestens eine der Detailaufnahmen das zu überwachende Betriebsmittel in hoher Auslösung und bei guten Sichtverhältnissen abbildet. Somit erhöht die vorrausschauende Ausrichtung der Detailkamera die Zuverlässigkeit der Zustandsüberwachung und damit der Verfügbarkeit der Anlage.

In einer Weiterbildung der vorgenannten Ausführungsform wird und eine bereits erfasste Anbringungshöhe der Leitung berücksichtigt, indem die Position des Betriebsmittels an einem Schnittpunkt des extrapolierten Leitungsverlaufs mit einer horizontalen Ebene auf Anbringungshöhe festgelegt wird. Dies ist ein Vorteil, weil dies die Qualität der Positionsermittlung verbessert.

In einer alternativen bevorzugten Ausführungsform des erfindungsgemäßen Verfahrens wird mittels der Auswerteeinrichtung die Position eines Betriebsmittels an einem Mast abgeschätzt, indem anhand einer vorher bekannten Position des Masten und einer bereits erfassten Anbringungshöhe die Position des Betriebsmittels an einem Schnittpunkt einer vertikalen Linie durch die Position des Masten mit einer horizontalen Ebene auf Anbringungshöhe festgelegt wird. Diese Ausführungsform hat den Vorteil, dass nach einer Datenerfassung eines Masts in einer Reihe von Masten einer Freileitung bereits die Positionen der Betriebsmittel abgeschätzt werden können, wenn die Anbringungshöhe jeweils ähnlich ist. Dies ist z.B. in flachem Gelände der Fall. Bei hügeligem oder bergigem Gelände kann ein Höhenprofil derart berücksichtigt werden, dass auch eine sich von Mast zu Mast unterscheidende Anbringungshöhe verarbeitet werden kann.

In einer weiteren bevorzugten Ausführungsform des erfindungsgemäßen Verfahrens wird alternativ zu oder zusätzlich zu den Betriebsmitteln wenigstens eines der weiteren Objekte erkannt und mit Detailaufnahmen erfasst:
Schilder an den Masten, Anomalien an den Leitungen, Anbauteile an der Leitung und/oder den Masten, Anomalien an einem Mast, Vogelnester. Dabei werden sinngemäß in gleicher Weise wie eingangs für Isolatoren geschildert die weiteren Objekte erkannt und die Positionen dieser Objekte gespeichert.

In einer weiteren bevorzugten Ausführungsform des erfindungsgemäßen Verfahrens werden mittels der Auswerteeinrichtung die erkannten Betriebsmittel anhand ihrer Position räumlichen Clustern zugeordnet, um mittels der Cluster die Anzahl benötigter Ausrichtungsvorgänge der Detailkamera zu verringern. Die Detailkamera bzw. das Objektiv wird so ausgelegt, dass bei Kenntnis beispielsweise einer typischen Isolatorabmessung der Isolator vollformatig und ganzheitlich in der Aufnahme erfasst wird. Die Aufnahme von Isolatorgruppen bzw. Clustern bei nahebeieinanderliegenden Isolatoren zur Verringerung der Anstellpositionen der Detailsensorik spart Zeit und Kosten bei der Datenerfassung ein.

In einer weiteren bevorzugten Ausführungsform des erfindungsgemäßen Verfahrens werden mittels der Auswerteeinrichtung die Betriebsmittel anhand des Bilddatensatzes erkannt, wobei anhand von Beispieldaten die jeweiligen Positionen der Betriebsmittel unter Berücksichtigung des Punktwolkendatensatzes ermittelt werden. Dieser Ansatz einer direkten Detektion von Isolatoren oder anderen Objekten in den Bilddaten bedient sich einer Rückprojektion in den 3D Raum über den bekannten Bezug des Bildes zu den Koordinaten, die der Punktwolkendatensatz liefert. Beispielsweise kann ein Ansatz verfolgt werden, wie er von Joseph Redmon et al. in der Veröffentlichung "You Only Look Once: Unified, Real-Time Object Detection.", Conference on Computer Vision and Pattern Recognition (CVPR), 2016, pp. 779-788, beschrieben wurde. Dabei kann das Training des Algorithmus direkt mit Beispielbildern von Betriebsmitteln u.Ä., aufgenommen aus verschiedenen Perspektiven, erfolgen.

Ein ähnlicher und ebenfalls geeigneter Ansatz ist aus der Veröffentlichung "Faster R-CNN: Towards real-time object detection with region proposal networks" von Shaoquing Ren, Advances in neural information processing systems (pp. 91-99), 2015, bekannt.

Ferner stellt sich ausgehend von bekannten Anordnungen zur manuellen Erfassung von hochaufgelösten Luftaufnahmen von Anlagen an die Erfindung die Aufgabe, ein Anordnung anzugeben, mit der automatisiert und vergleichsweise schnell und kostengünstig eine Zustandsüberwachung einer Anlage durchführbar ist.

Die Erfindung löst diese Aufgabe durch eine Anordnung gemäß Anspruch 9. Bevorzugte Ausführungsformen ergeben sich aus den Ansprüchen 10 bis 14. Es ergeben sich für die erfindungsgemäße Anordnung und ihre Ausführungsformen sinngemäß die gleichen Vorteile wie eingangs für das erfindungsgemäße Verfahren erläutert.

Im Folgenden soll die Erfindung zur besseren Erläuterung anhand von Ausführungsbeispielen und dazugehörenden schematischen Figuren dargestellt werden. Dabei zeigt
- Figur 1: ein Ausführungsbeispiel einer erfindungsgemäßen Anordnung, und
- Figur 2: eine Detailansicht eines Flugobjekts gemäß der Anordnung aus Figur 1, und
- Figur 3: einen vergrößerten Bildausschnitt eines Hochspannungsmasten mit Isolatoren gemäß Figur 1, und
- Figur 4: ein Ausführungsbeispiel für eine vorausschauende Positionsabschätzung von Betriebsmitteln.

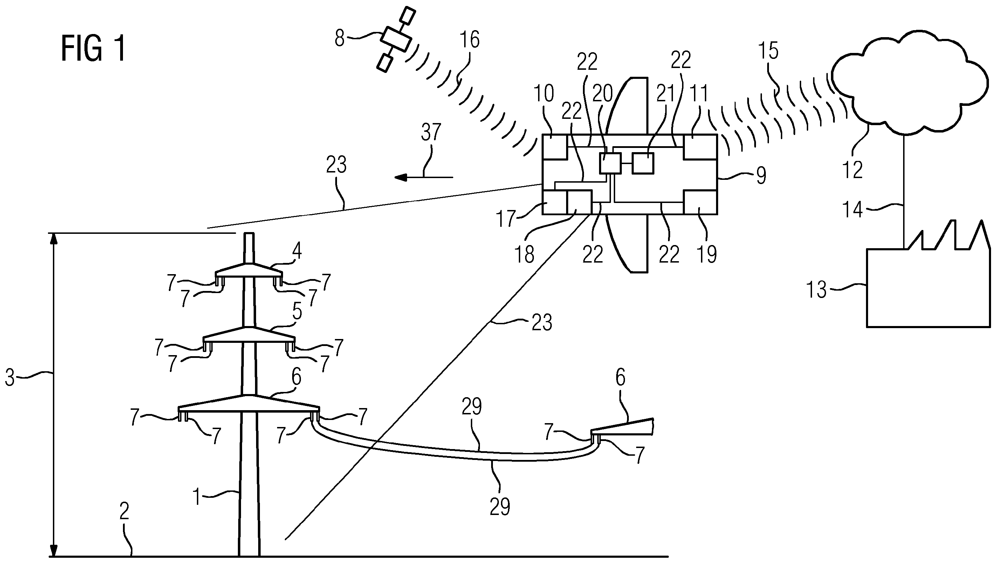

Die Figur 1 zeigt ein Ausführungsbeispiel einer erfindungsgemäßen Anordnung für eine Zustandsüberwachung einer Anlage mit Betriebsmitteln 7. Bei der Anlage handelt es sich in diesem Beispiel um Hochspannungsmasten 1 mit Hochspannungsfreileitungen 29, die zwischen den Masten 1 gespannt sind. Die Masten 1 stehen frei auf dem Boden 2. Die Masten 1 weisen dabei eine typische Höhe 3 auf. Im linken Teil der Figur 1 ist ein Mast 1 schematisch dargestellt. Er weist drei Querglieder 4, 5, 6 auf verschiedener Höhe auf, an denen jeweils zwei Isolatoren 7 hängen. An den Isolatoren 7 sind die Hochspannungsfreileitungen 29 befestigt. Aus Gründen der Übersichtlichkeit sind nur zwei Freileitungen 29 dargestellt.

Zur Gewinnung von Detailaufnahmen der Isolatoren 7 wird ein Flugobjekt 9 eingesetzt. Anhand von Detailaufnahmen kann manuell oder maschinell ein Schaden an den Isolatoren 7 erkannt werden, so dass bereits vor Ausfall eines Isolators rechtzeitig eine Wartung beziehungsweise ein Austausch eines beschädigten Isolators 7 durchgeführt werden kann.

Bei dem Flugobjekt 9 handelt es sich um eine unbemannte Drohne, die automatisch die Anlage mit Masten 1 und Freileitungen 29 abfliegt. Die Drohne 9 weist eine Positionserkennungseinrichtung 10 auf, die "Global-Positioning-System (GPS)"-Signale 16 eines GPS-Satelliten 8 empfängt und somit hochgenau die Position des Flugobjekts zu jedem gegebenen Zeitpunkt bestimmen kann. Das Flugobjekt 9 weist eine Überblicksensoranordnung 17, 18 auf, die als eine Überblickskamera 17 und eine Laserscaneinrichtung 18 ausgebildet ist. Weiterhin weist das Flugobjekt 9 eine Detailkamera 19 auf. Die Detailkamera 19, die Überblickskamera 17, die Laserscaneinrichtung 18, und die Positionsbestimmungseinrichtung 10 sind über Datenkommunikationsleitungen 22 mit einer Rechnereinrichtung 20 verbunden. Die Rechnereinrichtung 20 ist über eine Datenkommunikationsleitung 22 mit einem Datenspeicher 21 verbunden. Die Rechnereinrichtung 20 ist ferner über eine Datenkommunikationsleitung 22 mit einer Kommunikationseinrichtung 11 verbunden, die über Funksignale 15 mit einem Kommunikationsnetzwerk 12 verbunden ist. Das Kommunikationsnetzwerk 12 weist beispielsweise eine Cloud-Plattform auf, in der Daten des Flugobjekts ausgewertet werden können. Das Kommunikationsnetzwerk 12 ist über eine Kommunikationsverbindung 14 mit einer Leitstelle 13 verbunden, in der beispielsweise Flugdaten, mittels der Überblicksensoreinrichtung 17,18 gewonnene Überblicksdaten und Detailaufnahmen, die mittels der Detailkamera 19 gewonnen wurden, dauerhaft gespeichert und zur weiteren Verarbeitung vorgesehen werden.

Im Folgenden soll nun kurz die Funktionsweise des Flugobjekts 9 genauer erläutert werden. Beim Überflug über einen Hochspannungsmast 1 hat die entsprechend ausgerichtete Überblicksensoranordnung 17, 18 einen Blickwinkel 23, der weitwinklig ist und den Mast 1 in seiner gesamten Höhe abbilden kann. Aus den Überblicksdaten, also Bildern der Überblickskamera 17 und Punktwolkendaten der Laserscaneinrichtung 18, können mittels der Rechnereinrichtung 20 die Positionen der Isolatoren 7 abgeschätzt werden. Die Detailkamera 19 kann dann entsprechend mit einem vergleichsweise engen Blickwinkel (nicht dargestellt) auf die Isolatoren ausgerichtet werden, um Detailaufnahmen zu gewinnen. Beispielsweise kann ein Teleobjektiv eingesetzt werden. Die Detailaufnahmen werden mittels der Kommunikationseinrichtung 11 über das Netzwerk 12 zur Leitstelle 13 übertragen.

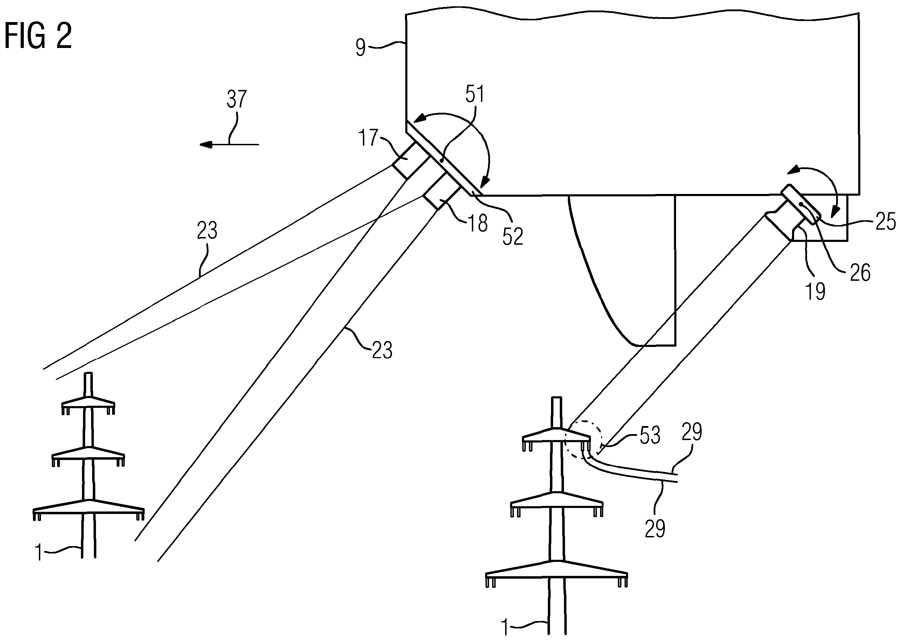

Die Figur 2 zeigt eine Detailansicht des Flugobjekts 9, das in Flugrichtung 37 vorne mit einer ersten Schwenkanordnung 52 ausgestattet ist. Die erste Schwenkanordnung 52 ist an einem ersten Aufhängepunkt 51 befestigt und ermöglicht eine gemeinsame Ausrichtung der an der Schwenkanordnung 52 angebrachten Überblickskamera 17 und der Laserscaneinrichtung 18. Durch geeignete Ausrichtung der ersten Schwenkanordnung 52 ergibt sich ein Blickwinkel 23, mit dem ein gesamter Mast 1 erfasst werden kann. Ist die Position der interessanten Betriebsmittel beziehungsweise Isolatoren 7 abgeschätzt, so kann die etwas weiter hinten am Flugobjekt angebrachte Detailkamera 19 ausgerichtet werden. Die Detailkamera 19 ist hierfür auf einer zweiten Schwenkanordnung 25 mit zweitem Aufhängepunkt 26 angeordnet und kann hochpräzise auf die vermutete Position 53 eines Betriebsmittels ausgerichtet werden, um Detailaufnahmen zu gewinnen.

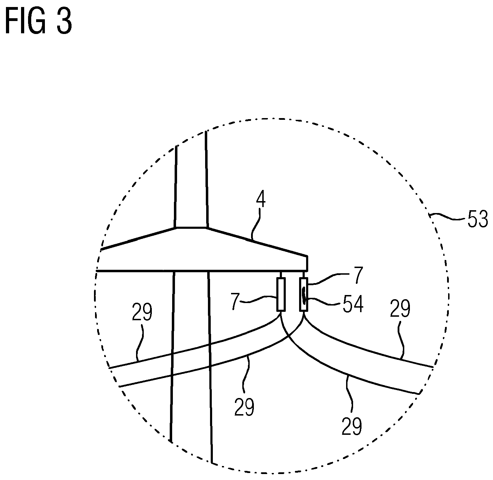

Figur 3 zeigt eine vergrößerte Detailansicht der vermuteten Position 53, an der sich zwei Isolatoren 7 befinden. Einer der Isolatoren 7 weist eine in entsprechend hochaufgelösten Detailaufnahmen zu erkennende Beschädigung 54 auf. Durch Auswertung der Detailaufnahmen ist es möglich, die Beschädigung 54 frühzeitig zu erkennen und den Isolator 7 auszutauschen. Dies erhöht die Zuverlässigkeit und Verfügbarkeit des Energienetzes, dessen Teil die Freileitung ist.

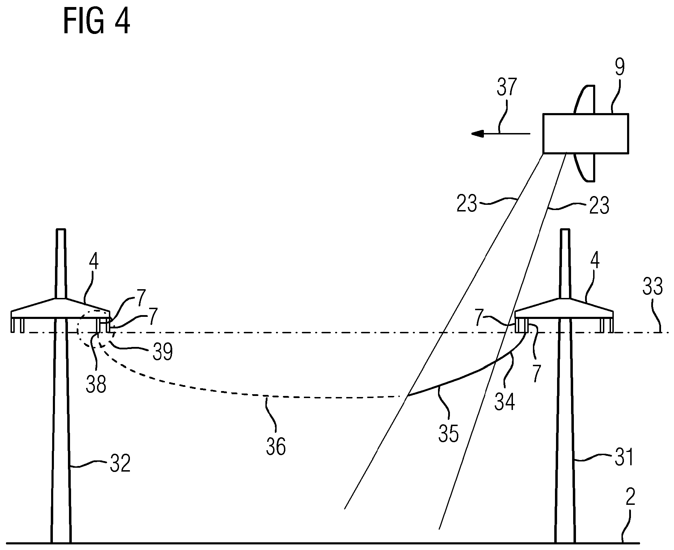

Figur 4 zeigt ein Ausführungsbeispiel für eine vorausschauende Abschätzung einer Position 39 eines Isolators 7. Das Flugobjekt 9 fliegt in Flugrichtung 37 parallel zum Erdboden an einer Freileitung entlang. Dabei hat es mit seiner Überblicksensoranordnung bereits den Masten 31 mit dem Isolator 7 erfasst. Außerdem hat es im Vorbeiflug bereits den Leitungsabschnitt 34 erfasst, der am Isolator auf einer Anbringungshöhe 33 befestigt ist. Im aktuellen Blickwinkel 23 der Überblicksensoranordnung befindet sich ein weiterer Leitungsabschnitt 35. Mittels einer (nicht dargestellten) Auswerteeinrichtung kann anhand der nun bekannten Leitungsabschnitte 34 und 35 eine Extrapolation eines Verlaufs einer durchhängenden Freileitung durchgeführt werden, die mittels der gestrichelten Kurve 36 angedeutet ist. Typischerweise sind aus Aufzeichnungen des Energienetzbetreibers sämtliche GPS-Positionen der Masten vorher bekannt, so dass auch die Position der in Flugrichtung 37 benachbarten Masten 32 dem Flugobjekt 9 bekannt ist. Wird nun der extrapolierte Leitungsverlauf 36 bis zu einem Schnittpunkt 38 mit einer vertikal durch den Masten 32 laufenden Linie verlängert, so kann entsprechend eine Position 39 des Isolators 7 am Masten 32 vermutet werden, ohne dass das Flugobjekt 9 diesen Bereich bereits erfasst hätte.

Ergänzend oder alternativ kann die Position 39 an einem Schnittpunkt einer horizontalen Ebene , d.h. einer parallel zum Erdboden 2 verlaufenden Ebene, auf Anbringungshöhe 33 mit der vertikalen Linie durch den Masten 32 und/oder mit dem extrapolierten Leitungsverlauf vermutet werden.

Dieses Verfahren bietet in seinen unterschiedlichen Varianten den Vorteil, dass die Überblickskamera bereits bei einer ersten Annäherung an den Masten 32 auf den interessanten Bereich 39 ausgerichtet werden kann, um so gegebenenfalls bereits erste Detailaufnahmen zu erfassen und abzuspeichern. Je mehr Detailaufnahmen aus unterschiedlichen Blickwinkeln bei Annäherung des Flugobjekts 9 aufgenommen werden, desto eher können Schäden am Isolator 7 entdeckt oder gegebenenfalls eine schlechte Bildqualität infolge von unvorteilhaften Licht- oder Witterungsverhältnissen ausgeglichen werden.

## Patentansprüche

1. Verfahren für eine Zustandsüberwachung einer Anlage (1,4,5,6,7,29,31,32) mit Betriebsmitteln (7), bei dem mittels eines ersten Fahrzeugs (9) mit einer Überblickssensoranordnung (17,18) zur optischen Erfassung der Anlage (1,4,5,6,7,29,31,32) Überblicksdaten erfasst werden, und
mittels eines zweiten Fahrzeugs (9) mit einer Detailkamera (19) Detailaufnahmen der Betriebsmittel (7) erzeugt werden, wobei
als erstes und als zweites Fahrzeug ein einziges Fahrzeug (9) eingesetzt wird, das die Überblickssensoranordnung (17,18) und die Detailkamera (19) aufweist,
wobei mittels einer Auswerteeinrichtung (20) in den Überblicksdaten die Betriebsmittel (7) erkannt und unter Berücksichtigung der Position des ersten Fahrzeugs (9) die Positionen der Betriebsmittel (7) bestimmt werden, und dass die Detailkamera (19) auf die jeweiligen Positionen der Betriebsmittel (7) ausgerichtet wird, und dass für die Überblickssensoranordnung (17,18) eine Laserscaneinrichtung (18) zur Erfassung eines Punktwolkendatensatzes eingesetzt wird,
wobei als Anlage (1,4,5,6,7,29,31,32) eine elektrische Freileitung mit Masten (1,31,32) und Leitungen (29) eingesetzt wird, wobei an den Masten (1,31,32) elektrische Betriebsmittel (7) angeordnet werden,
wobei als Betriebsmittel elektrische Isolatoren (7) an den Masten (1,31,32) verwendet werden,
**dadurch gekennzeichnet, dass** mittels der Auswerteeinrichtung (20) die Leitungen (29) und die Masten (1,31,32) durch ein anhand von Beispieldaten trainiertes automatisches Klassifikationsverfahren erkannt werden, und ein vereinfachtes Linien-Modell der erkannten Leitungen (29) und Masten (1,31,32) erstellt wird, und die Positionen der Isolatoren (7) am Kontaktpunkt der Masten (1,31,32) mit den Leitungen (7) erkannt werden.

2. Verfahren nach Anspruch 1, **dadurch gekennzeichnet, dass** für die Überblickssensoranordnung (17,18) eine Überblickskamera (17) zur Erfassung eines Bilddatensatzes eingesetzt wird.

3. Verfahren nach einem der vorhergehenden Ansprüche, **dadurch gekennzeichnet, dass** eine Gewinnung der Überblicksdaten zu einem ersten Zeitpunkt durchgeführt und später, zu einem zweiten Zeitpunkt und nach Bestimmung der Positionen der Betriebsmittel (7), eine Gewinnung der Detailaufnahmen durchgeführt wird.

4. Verfahren nach einem der vorhergehenden Ansprüche, **dadurch gekennzeichnet, dass** die Auswerteeinrichtung (20) im ersten Fahrzeug vorgesehen wird,
wobei als erstes und als zweites Fahrzeug ein einziges Fahrzeug (9) eingesetzt wird.

5. Verfahren nach einem der vorhergehenden Ansprüche, **dadurch gekennzeichnet, dass** die Auswerteeinrichtung in einer Leitstelle (13) für die Zustandsüberwachung vorgesehen wird.

6. Verfahren nach einem der vorhergehenden Ansprüche, **dadurch gekennzeichnet, dass** als das erste und das zweite Fahrzeug eine Flugdrohne (9) eingesetzt wird,
wobei als erstes und als zweites Fahrzeug ein einziges Fahrzeug (9) eingesetzt wird.

7. Verfahren nach einem der vorhergehenden Ansprüche, **dadurch gekennzeichnet, dass** alternativ zu oder zusätzlich zu den Betriebsmitteln (7) wenigstens eines der weiteren Objekte erkannt und mit Detailaufnahmen erfasst wird: Schilder an den Masten, Anomalien an den Leitungen, Anbauteile an der Leitung und/oder den Masten, Anomalien an einem Mast, Vogelnester.

8. Verfahren nach einem der vorhergehenden Ansprüche, **dadurch gekennzeichnet, dass** mittels der Auswerteeinrichtung (20) die erkannten Betriebsmittel (7) und/oder Objekte anhand ihrer Position räumlichen Clustern zugeordnet werden, um mittels der Cluster die Anzahl benötigter Ausrichtungsvorgänge der Detailkamera (19) zu verringern.

9. Anordnung für eine Zustandsüberwachung einer Anlage (1,4,5,6,7,29,31,32) mit Betriebsmitteln (7), mit einem ersten Fahrzeug (9), das zur optischen Erfassung von Überblicksdaten der Anlage (1,4,5,6,7,29,31,32) eine Überblickssensoranordnung (17,18) aufweist, und
ein zweites Fahrzeug (9) ausgebildet ist, mit einer Detailkamera (19), Detailaufnahmen der Betriebsmittel (7) zu erzeugen, wobei
als erstes und als zweites Fahrzeug ein einziges Fahrzeug (9) eingesetzt wird, das die Überblickssensoranordnung (17,18) und die Detailkamera (19) aufweist,
wobei eine Auswerteeinrichtung (20) vorhanden ist, die ausgebildet ist, in den Überblicksdaten die Betriebsmittel (7) zu erkennen und unter Berücksichtigung der Position des ersten Fahrzeugs (9) die Positionen der Betriebsmittel (7) zu bestimmen, wobei das zweite Fahrzeug (9) ausgebildet ist, die Detailkamera (19) auf die jeweiligen Positionen der Betriebsmittel (7) auszurichten, wobei die Überblickssensoranordnung (17,18) eine Laserscaneinrichtung (18) zur Erfassung eines Punktwolkendatensatzes aufweist,
wobei die Anordnung geeignet ist zur Zustandsüberwachung einer Anlage,
wobei die Anlage (1,4,5,6,7,29,31,32) eine elektrische Freileitung mit Masten (1,31,32) und Leitungen (29) aufweist, wobei an den Masten (1,31,32) elektrische Betriebsmittel (7) angeordnet sind,
wobei die Betriebsmittel elektrische Isolatoren (7) an den Masten (1,31,32) aufweisen,
**dadurch gekennzeichnet, dass** die Auswerteeinrichtung (20) ausgebildet ist, die Leitungen (29) und die Masten (1,31,32) durch ein anhand von Beispieldaten trainiertes automatisches Klassifikationsverfahren zu erkennen, und ein vereinfachtes Linien-Modell der erkannten Leitungen (29) und Masten (1,31,32) zu erstellen, und die Positionen der Isolatoren (7) am Kontaktpunkt der Masten (1,31,32) mit den Leitungen (29) zu erkennen.

10. Anordnung nach Anspruch 9, **dadurch gekennzeichnet, dass** die Überblickssensoranordnung (17,18) eine Überblickskamera (17) zur Erfassung eines Bilddatensatzes aufweist.

11. Anordnung nach einem der Ansprüche 9 oder 10, **dadurch gekennzeichnet, dass** das erste Fahrzeug (9) ausgebildet ist, die Überblicksdaten zu einem ersten Zeitpunkt zu gewinnen, und dass
das zweite Fahrzeug (9) ausgebildet ist, zu einem späteren zweiten Zeitpunkt und nach Bestimmung der Positionen der Betriebsmittel (7) die Detailaufnahmen zu gewinnen,
wobei als erstes und als zweites Fahrzeug ein einziges Fahrzeug (9) eingesetzt wird.

12. Anordnung nach einem der Ansprüche 9 bis 11, **dadurch gekennzeichnet, dass** die Auswerteeinrichtung (20) im ersten Fahrzeug vorgesehen ist,
wobei als erstes und als zweites Fahrzeug ein einziges Fahrzeug (9) eingesetzt wird.

13. Anordnung nach einem der Ansprüche 9 bis 12, **dadurch gekennzeichnet, dass** das erste und das zweite Fahrzeug eine Flugdrohne (9) ist,
wobei als erstes und als zweites Fahrzeug ein einziges Fahrzeug (9) eingesetzt wird.

14. Anordnung nach einem der Ansprüche 9 bis 13, **dadurch gekennzeichnet, dass** die Auswerteeinrichtung (20) ausgebildet ist, die Position eines Betriebsmittels (7) an einem Mast abzuschätzen, indem anhand einer vorher bekannten Position des Masten (32) und eines bereits erfassten Teilabschnitts (34) einer Leitung zu diesem Mast (32), die Position des Betriebsmittels (7) an einem Schnittpunkt (38) eines aus dem Teilabschnitt extrapolierten Leitungsverlaufs (36) mit einer vertikalen Linie durch die Position des Masten (32) festgelegt wird.

## Claims

1. Method for monitoring a condition of an installation (1, 4, 5, 6, 7, 29, 31, 32) with operating means (7), in which overview data are captured by means of a first vehicle (9) having an overview sensor arrangement (17, 18) for optically capturing the installation (1, 4, 5, 6, 7, 29, 31, 32), and
detailed images of the operating means (7) are generated by means of a second vehicle (9) having a detail camera (19), wherein
a single vehicle (9) which has the overview sensor arrangement (17, 18) and the detail camera (19) is used as the first and second vehicle,
wherein the operating means (7) are detected in the overview data by means of an evaluation device (20) and the positions of the operating means (7) are determined taking into account the position of the first vehicle (9), and the detail camera (19) is oriented with respect to the respective positions of the operating means (7), and
a laser scanning device (18) for capturing a point cloud data set is used for the overview sensor arrangement (17, 18),
wherein an electrical overhead power line having masts (1, 31, 32) and lines (29) is used as the installation (1, 4, 5, 6, 7, 29, 31, 32), wherein electrical operating means (7) are arranged on the masts (1, 31, 32),
wherein electrical insulators (7) on the masts (1, 31, 32) are used as operating means,
**characterized in that** the lines (29) and the masts (1, 31, 32) are detected using the evaluation device (20) by means of an automatic classification method trained on the basis of sample data, and a simplified line model of the detected lines (29) and masts (1, 31, 32) is created, and the positions of the insulators (7) are detected at the contact point of the masts (1, 31, 32) with the lines (7).

2. Method according to Claim 1, **characterized in that** an overview camera (17) for capturing an image data set is used for the overview sensor arrangement (17, 18).

3. Method according to one of the preceding claims, **characterized in that** the overview data are obtained at a first time and the detailed images are obtained subsequently at a second time and after the positions of the operating means (7) have been determined.

4. Method according to one of the preceding claims, **characterized in that** the evaluation device (20) is provided in the first vehicle,
wherein a single vehicle (9) is used as the first and second vehicle.

5. Method according to one of the preceding claims, **characterized in that** the evaluation device is provided in a control centre (13) for monitoring the condition.

6. Method according to one of the preceding claims, **characterized in that** an aerial drone (9) is used as the first and the second vehicle,
wherein a single vehicle (9) is used as the first and second vehicle.

7. Method according to one of the preceding claims, **characterized in that**, as an alternative or in addition to the operating means (7), at least one of the further objects is detected and is captured with detailed images: signs on the masts, anomalies on the lines, attachments on the line and/or the masts, anomalies on a mast, birds' nests.

8. Method according to one of the preceding claims, **characterized in that** the detected operating means (7) and/or objects are assigned to spatial clusters on the basis of their position by means of the evaluation device (20) in order to reduce the number of required orientation operations of the detail camera (19) by means of the clusters.

9. Arrangement for monitoring a condition of an installation (1, 4, 5, 6, 7, 29, 31, 32) with operating means (7), having a first vehicle (9) which has an overview sensor arrangement (17, 18) for optically capturing overview data relating to the installation (1, 4, 5, 6, 7, 29, 31, 32), and
a second vehicle (9) designed to generate detailed images of the operating means (7) using a detail camera (19), wherein
a single vehicle (9) which has the overview sensor arrangement (17, 18) and the detail camera (19) is used as the first and second vehicle,
wherein there is an evaluation device (20) which is designed to detect the operating means (7) in the overview data and to determine the positions of the operating means (7) taking into account the position of the first vehicle (9), wherein
the second vehicle (9) is designed to orient the detail camera (19) with respect to the respective positions of the operating means (7), wherein
the overview sensor arrangement (17, 18) has a laser scanning device (18) for capturing a point cloud data set,
wherein the arrangement is suitable for monitoring the condition of an installation,
wherein the installation (1, 4, 5, 6, 7, 29, 31, 32) has an electrical overhead power line having masts (1, 31, 32) and lines (29), wherein electrical operating means (7) are arranged on the masts (1, 31, 32),
wherein the operating means have electrical insulators (7) on the masts (1, 31, 32),
**characterized in that** the evaluation device (20) is designed to detect the lines (29) and the masts (1, 31, 32) by means of an automatic classification method trained on the basis of sample data, and to create a simplified line model of the detected lines (29) and masts (1, 31, 32), and to detect the positions of the insulators (7) at the contact point of the masts (1, 31, 32) with the lines (29).

10. Arrangement according to Claim 9, **characterized in that** the overview sensor arrangement (17, 18) has an overview camera (17) for capturing an image data set.

11. Arrangement according to either of Claims 9 and 10, **characterized in that** the first vehicle (9) is designed to obtain the overview data at a first time, and **in that**
the second vehicle (9) is designed to obtain the detailed images at a subsequent, second time and after the positions of the operating means (7) have been determined,
wherein a single vehicle (9) is used as the first and second vehicle.

12. Arrangement according to one of Claims 9 to 11, **characterized in that** the evaluation device (20) is provided in the first vehicle,
wherein a single vehicle (9) is used as the first and second vehicle.

13. Arrangement according to one of Claims 9 to 12, **characterized in that** the first and the second vehicle are an aerial drone (9),
wherein a single vehicle (9) is used as the first and second vehicle.

14. Arrangement according to one of Claims 9 to 13, **characterized in that** the evaluation device (20) is designed to estimate the position of an operating means (7) on a mast by determining, on the basis of a previously known position of the mast (32) and an already captured section (34) of a line to this mast (32), the position of the operating means (7) at an intersection point (38) of a line course (36) extrapolated from the section with a vertical line through the position of the mast (32).

## Revendications

1. Procédé de contrôle de l'état d'une installation (1, 4, 5, 6, 7, 29, 31, 32) ayant des moyens (7) de fonctionnement, dans lequel, au moyen d'un premier véhicule (9) ayant un agencement (17, 18) de capteur panoramique pour la détection optique de l'installation (1, 4, 5, 6, 7, 29, 31, 32), on détecte des données panoramiques,
et
au moyen d'un deuxième véhicule (9) ayant un appareil (19) photographique de détails, on produit des enregistrements de détails des moyens (7) de fonctionnement, dans lequel
on utilise, comme premier et deuxième véhicules, un véhicule (9) unique, qui a l'agencement (17, 18) de capteur panoramique et l'appareil (19) photographique de détails,
dans lequel, au moyen d'un dispositif (20) d'évaluation, on identifie dans les données panoramiques les moyens (7) de fonctionnement et, en tenant compte de la position du premier véhicule (9), on détermine les positions des moyens (7) de fonctionnement, et en ce que l'on dirige l'appareil (19) photographique de détails sur les positions respectives des moyens (7) de fonctionnement, et en ce que l'on utilise, pour l'agencement (17, 18) de capteur panoramique, un dispositif (18) à balayage laser de détection d'un ensemble de données de nuage de points,
dans lequel on utilise, comme installation (1, 4, 5, 6, 7, 29, 31, 32), une ligne électrique aérienne ayant des pylônes (1, 31, 32) et des lignes (29), dans lequel des moyens (7) électriques de fonctionnement sont montés sur les pylônes (1, 31, 32),
dans lequel on utilise, comme moyens de fonctionnement, des isolateurs (7) électriques sur les pylônes (1, 31, 32),
**caractérisé en ce que**, au moyen du dispositif (20) d'évaluation, on identifie les lignes (29) et les pylônes (1, 31, 32) par un procédé de classification automatique entraîné à l'aide de données d'exemples, et on établit un modèle linéaire simplifié des lignes (29) et des pylônes (1, 31, 32) identifiés, et on identifie les positions des isolateurs (7) aux points de contact des pylônes (1, 31, 32) avec les lignes (7).

2. Procédé suivant la revendication 1, **caractérisé en ce que** l'on utilise pour l'agencement (17, 18) de capteur panoramique un appareil (17) photographique panoramique pour la détection d'un ensemble de données d'image.

3. Procédé suivant l'une des revendications précédentes, **caractérisé en ce que** l'on effectue une obtention des données panoramiques à un premier instant et ultérieurement à un deuxième instant et, après détermination des positions des moyens (7) de fonctionnement, on effectue une obtention des enregistrements de détails.

4. Procédé suivant l'une des revendications précédentes, **caractérisé en ce que** l'on prévoit le dispositif (20) d'évaluation dans le premier véhicule,
dans lequel on utilise un véhicule (9) unique comme premier et comme deuxième véhicules.

5. Procédé suivant l'une des revendications précédentes, **caractérisé en ce que** l'on prévoit le dispositif d'évaluation dans un poste (13) de conduite pour le contrôle de l'état.

6. Procédé suivant l'une des revendications précédentes, **caractérisé en ce que** l'on utilise un drone (9) aérien comme premier et comme deuxième véhicules,
dans lequel on utilise un véhicule (9) unique comme premier et comme deuxième véhicules.

7. Procédé suivant l'une des revendications précédentes, **caractérisé en ce que**, en variante ou en plus des moyens (7) de fonctionnement, on identifie au moins un autre objet et on le détecte par des enregistrements de détails : panneaux sur les pylônes, anomalies sur les lignes, pièces rapportées sur les lignes et/ou les pylônes, anomalie sur un pylône, nid d'oiseau.

8. Procédé suivant l'une des revendications précédentes, **caractérisé en ce que**, au moyen du dispositif (20) d'évaluation, on associe les moyens (7) de fonctionnement identifiés et/ou les objets identifiés à l'aide de leurs positions à des partitionnements dans l'espace, afin de diminuer, au moyen des partitionnements, le nombre des opérations d'orientation nécessaires de l'appareil (19) photographique de détails.

9. Agencement pour le contrôle de l'état d'une installation (1, 4, 5, 6, 7, 29, 31, 32) ayant des moyens (7) de fonctionnement, comprenant un premier véhicule (9), qui a, pour la détection optique de données panoramiques de l'installation (1, 4, 5, 6, 7, 29, 31, 32), un agencement (17, 18) de capteur panoramique, et un deuxième véhicule (9) est constitué en ayant un appareil (19) photographique de détails, pour la production d'enregistrements de détails des moyens (7) de fonctionnement, dans lequel
il est utilisé, comme premier et comme deuxième véhicules, un véhicule (9) unique, qui a l'agencement (17, 18) de capteur panoramique et l'appareil (19) photographique de détails, dans lequel
il y a un dispositif (20) d'évaluation, qui est constitué pour identifier les moyens (7) de fonctionnement dans les données panoramiques et pour déterminer, en tenant compte de la position du premier véhicule (9), les positions des moyens (7) de fonctionnement, dans lequel
le deuxième véhicule (9) est constitué pour diriger l'appareil (19) photographique de détails sur les positions respectives des moyens (7) de fonctionnement, dans lequel
l'agencement (17, 18) de capteur panoramique a un dispositif (18) de balayage laser pour la détection d'un ensemble de données de nuage de points,
dans lequel l'agencement est propre au contrôle de l'état d'une installation,
dans lequel l'installation (1, 4, 5, 6, 7, 29, 31, 32) a une ligne électrique aérienne ayant des pylônes (1, 31, 32) et des lignes (29), dans lequel des moyens (7) électriques de fonctionnement sont montés sur les pylônes (1, 31, 32),
dans lequel les moyens de fonctionnement ont des isolateurs (7) électriques sur les pylônes (1, 31, 32),
**caractérisé en ce que** le dispositif (20) d'évaluation est constitué pour identifier les lignes (29) et les pylônes (1, 31, 32) par un procédé de classification automatique entraîné à l'aide de données d'exemple, et pour établir un modèle linéaire simplifié des lignes (29) et des pylônes (1, 31, 32) identifiés, et pour identifier les positions des isolateurs (7) aux points de contact des pylônes (1, 31, 32) avec les lignes (29).

10. Agencement suivant la revendication 9, **caractérisé en ce que** l'agencement (17, 18) de capteur panoramique a un appareil (17) photographique panoramique de détection d'un ensemble de données d'image.

11. Agencement suivant l'une des revendications 9 ou 10, **caractérisé en ce que** le premier véhicule (9) est constitué pour obtenir les données panoramiques à un premier instant, et **en ce que**
le deuxième véhicule (9) est constitué pour obtenir les enregistrements de détails à un deuxième instant ultérieur et après détermination des positions des moyens (7) de fonctionnement, dans lequel on utilise un véhicule (9) unique comme premier et comme deuxième véhicules.

12. Agencement suivant l'une des revendications 9 à 11, **caractérisé en ce que** le dispositif (20) d'évaluation est prévu dans le premier véhicule,
dans lequel on utilise un véhicule (9) unique comme premier et comme deuxième véhicules.

13. Agencement suivant l'une des revendications 9 à 12, **caractérisé en ce que** le premier et le deuxième véhicules est un drone (9) aérien,
dans lequel on utilise un véhicule (9) unique comme premier et comme deuxième véhicules.

14. Agencement suivant l'une des revendications 9 à 13, **caractérisé en ce que** le dispositif (20) d'évaluation est constitué pour estimer la position d'un moyen (7) de fonctionnement sur un pylône en, à l'aide d'une position connue à l'avance du pylône (32) et d'un tronçon (34) partiel déjà détecté d'une ligne par rapport à ce pylône (32), déterminant la position du moyen (7) de fonctionnement en un point (38) d'intersection d'un tracé (36) de ligne extrapolé à partir du tronçon partiel avec une ligne verticale par la position du pylône (32).
